# FASCICULE DE BREVET EUROPEEN

(11) **EP 3 820 293 B1**
(45) Date de publication et mention de la délivrance du brevet: **02.12.2026**
(21) Numéro de dépôt: 19744750.1
(22) Date de dépôt: 04.07.2019
(51) Int. Cl.: A21C 15/00, A23P 20/20

(54) **SUPPORT DE GARNITURE D'UN PRODUIT ALIMENTAIRE ET PROCÉDÉ ET DISPOSITIF DE PRÉPARATION D'UN PRODUIT ALIMENTAIRE**
HALTER FÜR DIE FÜLLUNG EINES LEBENSMITTELS UND VERFAHREN UND VORRICHTUNG ZUR HERSTELLUNG EINES LEBENSMITTELPRODUKTS
HOLDER FOR THE FILLING OF A FOOD PRODUCT AND METHOD AND DEVICE FOR PREPARING A FOOD PRODUCT

(30) Priorité: 10.07.2018 FR 1800725
(43) Date de publication de la demande: 19.05.2021
(73) Titulaire: Or Equip, 13790 Peynier (FR)
(72) Inventeur: ASSIUS, Yannick, 13710 FUVEAU (FR)
(74) Mandataire: Marchand, André
(86) Numéro de dépôt international: PCT/FR2019/000110
(87) Numéro de publication internationale: WO 2020/012078

(56) Documents cités:
- EP-A1- 1 172 304
- DE-A1- 102009 007 432
- FR-A1- 2 994 635
- FR-A1- 3 016 769
- US-A1- 2012 152 797
- US-A1- 2014 272 036

## Description

### DOMAINE TECHNIQUE

La présente invention est relative à un dispositif de préparation d'un produit alimentaire comprenant une garniture.

L'invention s'applique en particulier à la préparation à la demande de sandwichs, wraps, crêpes, ou salades comportant une garniture préparée à l'avance et conservée au froid.

### ETAT DE LA TECHNIQUE

L'invention s'applique notamment aux sandwichs et salades comportant une garniture alimentaire comportant un assortiment d'aliments d'origine végétale ou animale, généralement «solides», qui sont empilés et/ou juxtaposés, et le cas échéant additionnés d'une préparation liquide ou semi liquide telle qu'une sauce.

FR2659942 (COFIAL) décrit un emballage pour une garniture de sandwich qui comporte une plaquette profilée en forme de V et réalisée en polypropylène injecté, un film recouvrant la face intérieure de la plaquette et un second film fixé aux bords longitudinaux de la plaquette et délimitant, avec le premier film, un volume de réception de la garniture. Une extrémité arrière de la plaquette comporte un rebord transversal servant d'appui pour l'extraction de l'emballage. Pour la préparation d'un sandwich, l'emballage contenant la garniture est engagé dans un morceau de pain placé sur un support pivotant, puis l'emballage est extrait du pain et la garniture est retenue dans le pain par une molette plaquant le film contre la plaquette.

FR2675036 (LAFFARGUE) décrit un dispositif pour préparer à l'avance des garnitures pour sandwich qui comporte un support recevant les ingrédients de la garniture, et une poignée permettant de le saisir pour l'introduire, avec la garniture qu'il supporte, entre deux tranches de pain. Le support est longé de rebords servant à maintenir les ingrédients sur le support, et peut être rigidifié par des nervures. La poignée sert aussi à soustraire le support du sandwich tout en exerçant une pression sur la garniture par l'intermédiaire du pain. Un ruban plié est interposé entre le support et les ingrédients pour éviter leur adhérence sur le support.

Ces procédés et dispositifs provoquent un écrasement de la garniture et ne permettent pas de préserver l'aspect visuel de la garniture. Par ailleurs, ces supports de garniture ne sont pas adaptés pour être garnis, portés, et/ ou déplacés à la main par un opérateur.

EP2104429 (OR EQUIP) décrit un procédé de préparation d'un sandwich dans lequel on pose un support chargé d'une garniture sur un support basculant (pivotant) selon un axe horizontal, on engage les parties inférieure et supérieure d'un morceau de pain de part et d'autre du support basculant, et on transfère la garniture dans un espace à garnir du morceau de pain en faisant basculer les supports en direction de l'espace â garnir, jusqu'à obtenir une inclinaison du support de garniture propre à provoquer le glissement de la garniture hors du support de garniture, dans l'espace à garnir, tout en maintenant le support de garniture sur le support basculant par des moyens de maintien agissant par effet mécanique, pneumatique, ou magnétique.

EP2104429 décrit également un support de garniture constitué par un profilé d'un matériau magnétique comportant une base plane de forme allongée prolongée par deux bords longitudinaux inclinés par rapport à la base, et dont la face supérieure est revêtue d'un matériau favorisant le glissement des ingrédients de la garniture.

FR3016769 (OR EQUIP) décrit un procédé similaire pour la préparation de salades comportant une garniture disposée sur une préparation alimentaire, dans lequel on dispose la préparation alimentaire sur un second support que l'on déplace au cours du glissement de la garniture de façon à répartir la garniture sur la préparation alimentaire.

### EXPOSÉ DE L'INVENTION

Un inconvénient des dispositifs de préparation de sandwichs ou salades comportant un support pivotant équipé de moyens de retenue d'un support de garniture par effet magnétique est qu'ils nécessitent l'emploi d'un matériau magnétique pour réaliser le support de garniture. L'utilisation du support pivotant est ainsi limitée à certains supports de garniture.

Un objectif de l'invention est de proposer un dispositif de préparation de produits alimentaires tels que sandwiches ou salades, comportant un support pivotant équipé de moyens magnétiques de retenue d'un support de garniture qui n'est pas réalisé dans un matériau magnétique.

Un objectif de l'invention est de proposer un dispositif de préparation de produits alimentaires comportant un support pivotant équipé de moyens magnétiques, mécaniques, ou pneumatiques de retenue d'un support de garniture, qui puisse être utilisé avec des supports de garniture ne comportant pas de moyens de liaison réversible complémentaires des moyens de liaison équipant le support pivotant.

Un objectif de l'invention est de proposer un support de garniture et un procédé de préparation de produits alimentaires à partir d'une garniture déposée à l'avance sur le support de garniture, qui permette d'améliorer la préservation des qualités esthétiques et organoleptiques de la garniture, et/ou d'améliorer la conservation de la garniture.

Un objectif de l'invention est de proposer un procédé et un dispositif de préparation de produits alimentaires comportant un support pivotant, qui soi(en)t amélioré(s) et/ou qui remédie(nt), en partie au moins, aux lacunes ou inconvénients des procédés et dispositifs connus de préparation de sandwichs ou salades.

Un objectif de l'invention est de proposer un support de garniture de produits alimentaires réalisé en matière plastique ou en carton, qui soit adapté pour être garni manuellement, et qui facilite le port et le déplacement du support garni, par une seule main d'un opérateur.

Un objectif de l'invention est de proposer un support de garniture de produits alimentaires, qui soit amélioré et/ou qui remédie, en partie au moins, aux lacunes ou inconvénients des supports connus de garniture de sandwichs ou salades.

Un objectif de l'invention est de proposer un support de garniture léger, robuste, et peu coûteux.

Un objectif de l'invention est de proposer un procédé de fabrication d'un support de garniture de produits alimentaires qui soit amélioré et/ ou qui remédie, en partie au moins, aux lacunes ou inconvénients des procédés connus de fabrication de supports de garniture de produits alimentaires.

Selon un aspect de l'invention, il est proposé un dispositif de préparation d'un produit alimentaire comprenant une garniture, le dispositif comprenant au moins un support de garniture alimentaire, et un support pivotant selon un axe horizontal, dans lequel le support de garniture alimentaire est réalisé en matière plastique ou en carton et comprend une paroi de réception de la garniture qui s'étend le long d'un premier plan ; au moins deux parois de retenue de la garniture qui sont inclinées par rapport au premier plan et qui bordent respectivement deux premiers bords opposés de la paroi de réception, au moins deux parois de renfort qui sont inclinées par rapport au premier plan et qui bordent respectivement deux seconds bords opposés de la paroi de réception, et au moins quatre parois d'angle, chaque paroi d'angle reliant et prolongeant une paroi de retenue et une paroi de renfort, le dispositif comprenant des moyens de liaison réversible du support de garniture alimentaire avec le support pivotant, pour maintenir le support de garniture alimentaire sur le support pivotant lorsque le support pivotant est incliné, dispositif dans lequel le support de garniture alimentaire comprend deux parois longitudinales de renfort qui sont inclinées par rapport aux parois de retenue, qui bordent respectivement les parois de retenue et sont reliées aux parois d'angle, et en ce que les moyens de liaison réversible comprennent les parois longitudinales de renfort du support de garniture qui délimitent, avec les parois de retenue et le cas échéant les parois d'angle, deux cavités de réception d'organes mâles de liaison solidaires du support pivotant.

Selon un mode de réalisation, l'épaisseur des parois est inférieure à un millimètre, en particulier située dans une plage allant de 200 ou 300 µm jusqu'à 700 ou 800 µm.

Selon un mode de réalisation, les parois de renfort et d'angle ceinturent le support de garniture alimentaire et s'étendent sensiblement continûment tout autour de la paroi de réception et des parois de retenue.

Selon un mode de réalisation, certaines au moins des parois de renfort et d'angle s'étendent, en partie au moins, sous la face inférieure de la paroi de réception.

Selon un mode de réalisation, certaines au moins des parois de renfort et d'angle présentent un bord libre qui s'étend le long d'un second plan parallèle au premier plan.

Selon un mode de réalisation, le support de garniture alimentaire comporte des moyens de collecte et d'évacuation d'un liquide s'échappant de la garniture, y compris lorsque le support est horizontal.

Selon un mode de réalisation, les moyens de collecte et d'évacuation comportent une ou plusieurs dépression(s) formée(s) dans la paroi de réception ou les parois de retenue, et le cas échéant dans les parois de renfort.

Selon un mode de réalisation la ou les dépression(s) présente(nt) un contour ouvert, en particulier de forme allongée, une dépression pouvant former une rainure débouchant hors du support de garniture alimentaire, à deux extrémités opposées du support.

Selon un mode de réalisation, le support de garniture présente une forme allongée selon un axe longitudinal, qui comporte deux parois de retenue qui s'étendent parallèlement à l'axe longitudinal, et dans lequel les moyens de collecte et d'évacuation comportent une rainure(s) formée(s) dans la paroi de réception et/ou dans les parois de retenue, et qui s'étend(ent) parallèlement à l'axe longitudinal.

Selon un mode de réalisation la matière plastique du support de garniture alimentaire est essentiellement constituée de polytéréphtalate d'éthylène amorphe ou d'un biopolymère tel que l'acide polylactique.

Selon un mode de réalisation, le support de garniture alimentaire est fabriqué par thermoformage ou par injection.

Selon un mode de réalisation, la liaison réversible est obtenue par emboîtement forcé des organes mâles de liaison dans les cavités de réception du support de garniture.

Selon un mode de réalisation les organes mâles de liaison sont intégrés à un dispositif d'adaptation séparable du support pivotant et pouvant être lié au support pivotant de façon réversible, en particulier par magnétisme.

Selon un mode de réalisation le support pivotant est articulé selon un axe d'articulation horizontal, et comprenant un dispositif d'adaptation comportant des moyens de liaison magnétique réversible complémentaires de moyens de liaison magnétique réversible équipant le support pivotant, ainsi que des seconds organes de liaison réversible complémentaires de premiers organes de liaison réversible équipant le support de garniture, de sorte que le dispositif d'adaptation peut être interposé entre le support pivotant et le support de garniture de façon à assurer une liaison réversible entre le support pivotant équipé de moyens de liaison magnétique et le support de garniture équipé de moyens de liaison mécanique.

Selon un mode de réalisation le support pivotant comporte des aimants, et le dispositif d'adaptation comporte une plaque ou lame d'un matériau magnétique apte à être placée au contact du support pivotant pour être soutenue et maintenue solidaire de ce support par la force d'attraction magnétique exercée par les aimants, notamment lorsque le support pivotant est incliné à la verticale.

Selon un mode de réalisation la désolidarisation du support de garniture et du dispositif d'adaptation peut être obtenue en exerçant un premier effort de désolidarisation sur le support de garniture alimentaire, tandis que la désolidarisation du dispositif d'adaptation et du support pivotant peut être obtenue en exerçant un second effort de désolidarisation sur le dispositif d'adaptation, la valeur du premier effort de désolidarisation étant inférieure à la valeur du second effort de désolidarisation.

Les parois de renfort et les parois ou liaisons d'angle augmentent la résistance du support de garniture à une déformation résultant d'un pincement du support par un opérateur saisissant le support par les parois de retenue, entre les doigts d'une de ses mains, ce qui permet de réaliser un support de garniture dont les parois sont minces, en particulier des parois dont l'épaisseur est uniforme (identique).

L'invention permet de fabriquer, de préférence par moulage, un support de garniture qui présente une résistance mécanique suffisante pour supporter une garniture dont la masse peut par exemple être située dans une plage allant de 100 gramme environ à 200 gramme environ, et pour être pris en main et manipulé sans déformations excessives.

Le support de garniture ainsi peut reposer de façon stable sur un support, en particulier sur le support pivotant, par l'intermédiaire de la face inférieure de la paroi de réception ou par l'intermédiaire des bords libres des parois de renfort ou d'angle lorsque le second plan s'étend sous la face inférieure de la paroi de réception. La paroi de réception de garniture s'étend alors au-dessus du plan de pose du support de garniture, ce qui augmente la visibilité de la garniture.

Les dépressions peuvent contribuer à rigidifier le support de garniture, facilitant ainsi la manipulation du support de garniture chargé d'une garniture.

Ces dépressions peuvent également contribuer à réduire l'adhérence des ingrédients de la garniture sur les parois du support de garniture, facilitant ainsi le transfert de la garniture hors du support de garniture, par glissement de la garniture sur le - et hors du - support lorsque celui-ci est incliné.

Notamment lorsque le support de garniture ne comporte pas cette (ces) dépression(s), la collecte du (semi-)liquide peut être assurée par la paroi de réception de garniture, et l'évacuation du (semi-)liquide peut être assurée par au moins un bord de la paroi de réception de garniture, en particulier par un bord transversal d'extrémité de la paroi de réception de garniture, ce(s) bord(s) n'étant pas surélevé(s) par rapport à cette paroi, et de préférence par la (les) parois transversale(s) prolongeant ce(s) bord(s) vers le bas (c.à.d. sous le plan dela paroi de réception de garniture).

Selon un autre aspect de l'invention, il est proposé un procédé de préparation d'un produit alimentaire comportant une garniture alimentaire, utilisant un dispositif de préparation d'un produit alimentaire tel que décrit ci-dessus, dans lequel on dispose la garniture sur le support de garniture alimentaire ; on collecte des composés liquides ou semi liquides s'écoulant de la garniture, par des moyens de collecte tels que des rainures intégré(e)s au support de garniture alimentaire ; - on incline le support pivotant pour transférer la garniture alimentaire du support de garniture alimentaire jusqu'à une préparation alimentaire, en inclinant suffisamment le support garni pour provoquer le glissement de la garniture sur le - et hors du - support ; et on évacue et/ou on retient une partie au moins des composés liquides ou semi liquides collectés sur le support.

Selon un mode de réalisation, on dispose la garniture alimentaire sur le support de garniture alimentaire, on conditionne le support garni dans une enceinte étanche contenant un ou plusieurs gaz formant une atmosphère protectrice, en particulier un mélange d'azote et de dioxyde de carbone, et on transfère, à la demande, la garniture du support garni jusque sur la préparation alimentaire, en inclinant suffisamment le support garni pour provoquer le glissement de la garniture sur le - et hors du - support.

Selon un mode de réalisation on conserve le support garni, le cas échéant conditionné sous atmosphère protectrice, dans une enceinte réfrigérée.

L'invention permet d'obtenir un produit alimentaire plus agréable à observer et à consommer, plus facile à conserver, et/ou plus goûteux.

Le support garni, le cas échéant conditionné sous vide ou sous atmosphère protectrice, peut être conservé dans une enceinte réfrigérée.

D'autres aspects, caractéristiques, et avantages de l'invention apparaissent dans la description suivante qui se réfère aux figures annexées et illustre, sans aucun caractère limitatif, des modes de réalisation de l'invention.

### BREVE DESCRIPTION DES FIGURES

[Fig. 1] est une vue en perspective schématique d'un support de garniture.
[Fig. 2] est une vue en coupe transversale selon 11-11 du support illustré figure 1.
[Fig. 3] est une vue en coupe longitudinale selon III-III du support illustré figure 1.
[Fig. 4] est une vue en coupe transversale d'une variante du support illustré figures 1 à3.
[Fig. 5] est une vue en perspective schématique d'un dispositif d'adaptation de moyens de liaison réversible.
[Fig. 6] est une vue en coupe transversale schématique d'un support de garniture solidarisé temporairement à un support pivotant par un dispositif d'adaptation similaire à celui illustré figure 5.
[Fig. 7] est une vue en plan schématique du support illustré figure 1.

### DESCRIPTION DETAILLEE DE L'INVENTION

Sauf indication explicite ou implicite contraire, des éléments ou organes - structurellement ou fonctionnellement - identiques ou similaires sont désignés par des repères identiques sur les différentes figures.

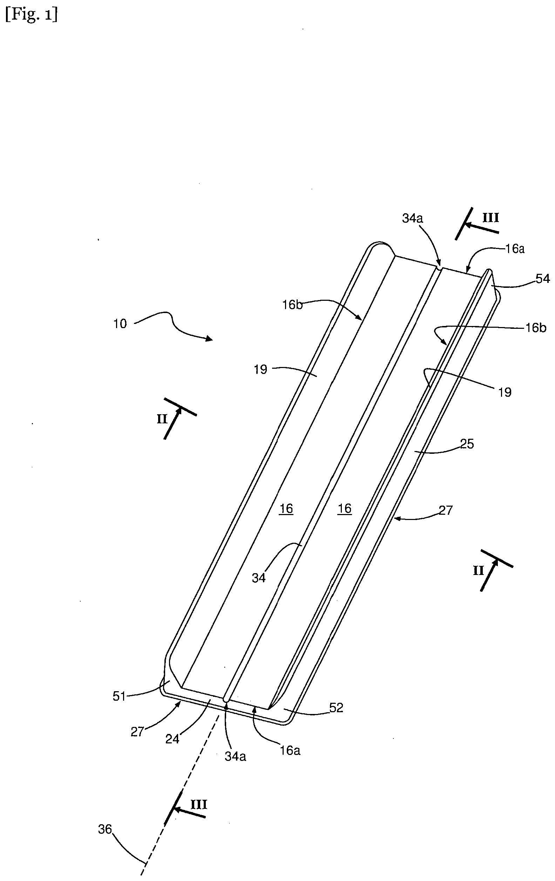

Par référence aux figures 1 à 3 et 6 notamment, le support 10 sert à stocker temporairement une garniture 45 alimentaire agencée pour être déposée, à la demande, sur une préparation alimentaire telle qu'un tronçon ouvert d'une baguette de pain afin de former un sandwich ; la garniture 45 peut également être déposée sur une préparation végétale contenue dans un conteneur pour former une salade garnie.

A cet effet, le support 10 portant la garniture est déposé sur un support 13 pivotant d'un dispositif 12 de préparation de sandwichs ou de salades. Le support 13 peut comporter une plaque plane, par exemple de forme rectangulaire, agencée et dimensionner pour supporter le support 10.

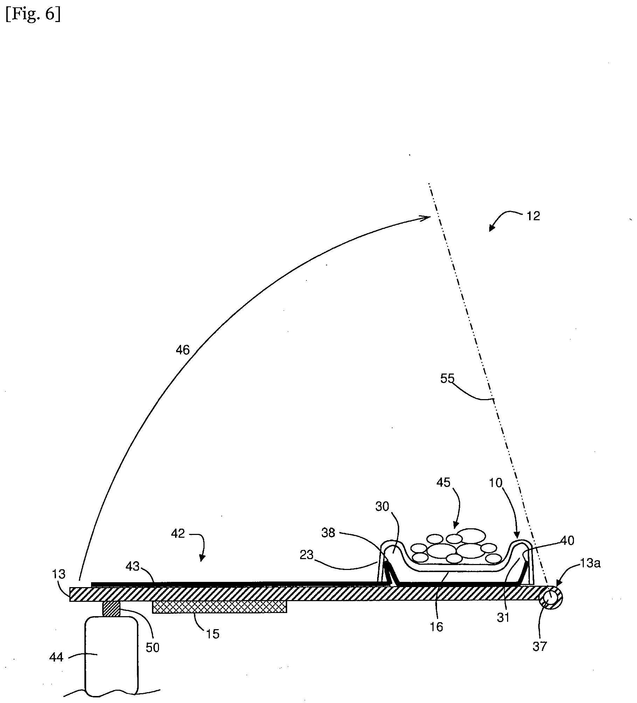

Dans le mode de réalisation illustré figure 6, le support 13 est monté pivotant selon un axe horizontal 37, par rapport à un socle 44 faisant partie du dispositif 12.

L'axe 37 s'étend à proximité et le long d'un bord 13a du support 13, sensiblement dans le plan du support 13 (et perpendiculairement à la figure 6), et le support 10 est maintenu sur le support 13 à proximité et le long du bord 13a et de l'axe 37.

Comme illustré par la flèche 46, le support 13 peut ainsi être incliné par un opérateur saisissant le support 13 par son bord opposé au bord 13a, pour passer de la configuration d'attente illustrée figure 6 dans laquelle le support 13 s'étend horizontalement et est en appui sur une butée 50 solidaire du socle 44, jusqu'à une configuration d'évacuation de la garniture 45 par glissement hors du support 10, dans laquelle le support 13 et le support 10 s'étendent le long d'un plan 55 incliné par rapport à l'horizontale.

Pour permettre la fixation temporaire du support 10 garni au support 13 pivotant, puis la séparation du support 10 du support 13 après transfert de la garniture sur la préparation alimentaire, le dispositif 12 comporte des moyens ou organes de liaison réversible du support de garniture avec le support pivotant, par exemple comme décrits plus loin.

Le support 10 illustré figures 1 à 3 et 7 comporte une paroi 16 de réception de la garniture, de forme sensiblement rectangulaire, qui s'étend le long d'un premier plan 18, et sur laquelle peut être déposée la garniture 45 comme illustré figure 6.

Le support 10 comporte deux parois 19 de retenue de la garniture qui s'étendent respectivement le long de deux plans tels que celui repéré 22, sont inclinées par rapport au premier plan 18 selon un angle 21 obtus d'inclinaison, et s'étendent le long des deux bords longitudinaux opposés 16b dela paroi 16.

Le support 10 et chacune des parois 16, 19 présentent une forme allongée selon un axe longitudinal 36.

Les parois latérales 19 servent à retenir la garniture sur la paroi centrale 16 tant que le support n'est pas incliné suffisamment pour provoquer le glissement de la garniture et son échappement hors du support par franchissement de l'une des deux parois latérales 19.

Le support 10 comporte en outre quatre parois 23 à 26 de renfort: deux parois 23, 25 longitudinales sensiblement planes s'étendent respectivement le long des deux parois 19 de retenue qu'elles prolongent vers le bas du support, et deux parois 24, 26 transversales s'étendent respectivement le long des deux bords 16a transversaux d'extrémité de la paroi 16 qu'elles prolongent également vers le bas du support.

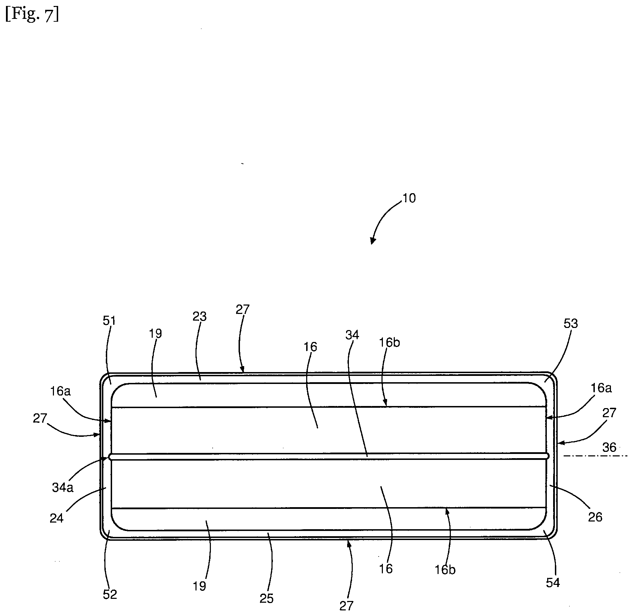

Les quatre parois 23 à 26 de renfort sont raccordées deux à deux par quatre parois d'angle 51 à 54 (figure 7 notamment) incurvées formant des parois de raccordement des parois 23 à 26, qui sont saillantes vers l'extérieur du support et de forme arrondie, par exemple en forme de calotte cylindrique ou tronconique.

Les parois 23 à 26 de renfort sont également raccordées aux parois 16, 19 qu'elles prolongent et bordent, par quatre autres congés de raccordement dont le rayon de courbure est inférieur au rayon de courbure des parois d'angle 51 à 54.

Comme illustré figures 1 à 3 et 7, l'extrémité inférieure - ou bord libre - 27 des parois 23 à 26 de renfort fait saillie vers l'extérieur du support 10, s'étend continûment le long d'un contour rectangulaire dont les angles sont arrondis, et s'étend dans un plan 29 parallèle au plan 18 de la surface 19.

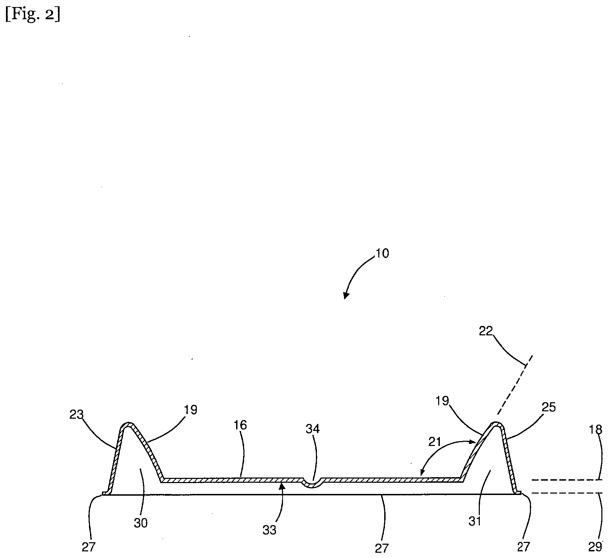

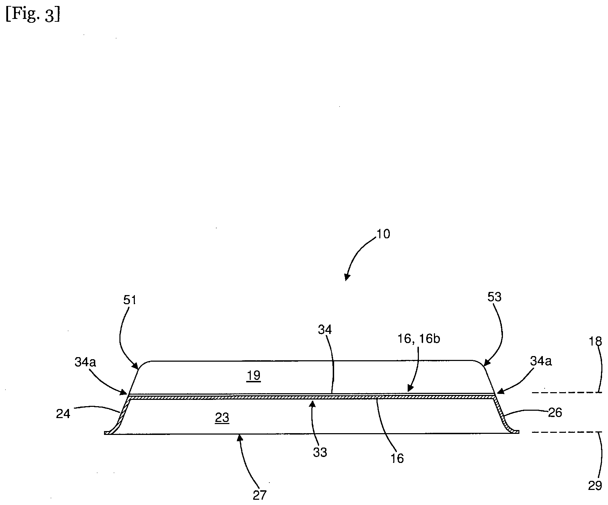

On peut observer figures 2 et 3 que le second plan 29 s'étend sous la face inférieure 33 de la paroi de réception 16 de la garniture 45.

Chacune des parois 16, 19, 23, et 25 présente une forme allongée le long de l'axe longitudinal 36, tandis que les parois 24, 26 de renfort transversal s'étendent transversalement (par référence à l'axe 36).

Comme illustré figures 1 à 3 et 6, les deux parois 19 de retenue et les deux parois longitudinales 23, 25 de renfort délimitent, avec les parois d'angle, deux cavités 30, 31 longitudinales dans lesquelles peuvent être emboîtés en force des organes mâles de liaison solidaires du support pivotant 13, pour assurer une liaison réversible du support 10 et du support pivotant 13.

Comme illustré figures 1 à 3 et 7, la paroi 16 de réception est creusée d'une rainure 34 longitudinale servant à collecter des compositions liquides ou pâteuses provenant de la garniture reposant sur le support 10, à évacuer une partie au moins de ces compositions liquides ou pâteuses hors du support par ses deux extrémités longitudinales 34a lorsque le support 10 et la paroi 16 sont horizontaux, et le cas échéant à retenir les compositions liquides ou pâteuses non évacuées, lorsque le support est incliné par une rotation (cf. flèche 46 figure 6) d'axe parallèle à son axe longitudinal 36.

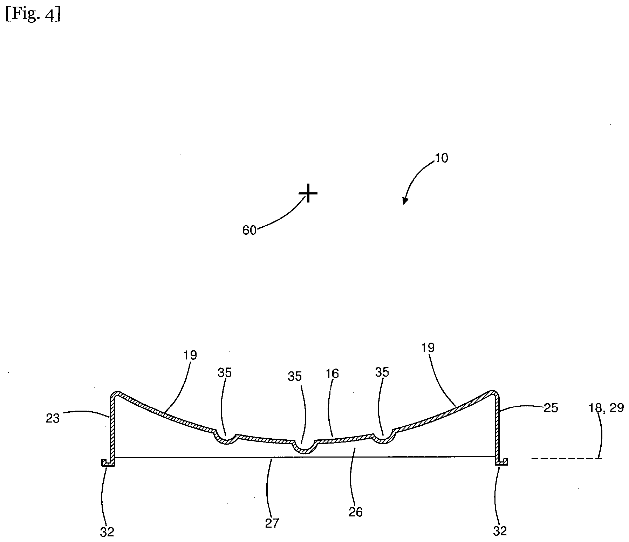

Dans le mode de réalisation illustré figure 4, plusieurs dépressions 35 de collecte, d'évacuation, et le cas échéant de retenue de liquide, par exemple en forme de rainures longitudinales similaires à la rainure 34, sont prévues dans la paroi de réception 16 et dans les deux parois 19 de retenue bordant et prolongeant la paroi 16.

Dans ce mode de réalisation, les parois 16, 19 peuvent par exemple épouser la forme d'une calotte cylindrique de section circulaire et dont l'axe 60 est parallèle à l'axe longitudinal 36 du support.

Dans ce mode de réalisation, les bords inférieurs des parois de renfort et/ou d'angle comportent des saillies 32 par exemple en forme d'ergots, plots, ou nervures, qui forment des organes mâles de liaison mécanique pouvant s'emboîter en force dans des organes femelles de forme complémentaire qui sont solidaires du support 13 pivotant, pour assurer le maintien du support 11 sur le support 13.

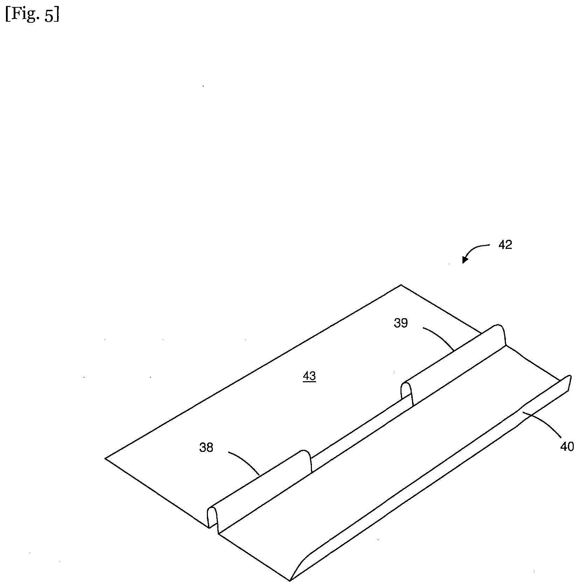

Le dispositif 42 d'adaptation illustré figure 5 sert d'interface de liaison entre un support pivotant 13 tel que celui illustré figure 6, qui est pourvu d'aimants 15,
et un support 10 de garniture pourvu des cavités 30, 31 de réception d'organes de liaison mécanique.

A cet effet, le dispositif 42 d'adaptation comporte une plaque ou lame 43 d'un matériau magnétique, par exemple de l'acier inoxydable, apte à être placée au contact du support plan 13 pour être soutenue et maintenue solidaire de ce support par la force d'attraction magnétique exercée par les aimants 15 situés sous le support 13.

La plaque 43 est pourvue de trois plis ou nervures 38 à 40 parallèles faisant saillie sur la face supérieure de la plaque, et dont la hauteur est voisine de (en particulier légèrement inférieure à) la profondeur des cavités 30, 31 du support 10.

Les deux plis 38, 39 sont alignés et espacés du pli 40 d'une distance voisine de (en particulier légèrement supérieure à) celle séparant les parois latérales de renfort 23, 25 du support 10.

Ainsi, les plis 38 à 40 forment des organes mâles de liaison du dispositif 42 et du support 10, par un emboîtement forcé des plis 38 à 40 dans les cavités 30, 31 du support 10, comme illustré schématiquement figure 6.

Cet emboîtement peut provoquer une légère déformation sensiblement élastique du support 10, en particulier une déformation des parois latérales 23, 25 de renfort du support 10.

Dans un mode de réalisation non représenté dans lequel le dispositif 12 de préparation ne comporte pas de dispositif 42 d'adaptation des moyens de maintien du support de garniture sur le support 13 pivotant, des organes de liaison mécanique réversible tels que les plis saillants 38 à 40 peuvent être intégrés au support 13 pivotant pour coopérer avec les cavités 30, 31 du support 10 afin de retenir le support 10 sur le support 13, notamment lorsque celui-ci est incliné.

## Revendications

1. Dispositif (12) de préparation d'un produit alimentaire comprenant une garniture, le dispositif comprenant
- au moins un support (10) de garniture alimentaire (45), et
- un support (13) pivotant selon un axe horizontal (37),
dans lequel :
- le support (10) de garniture alimentaire (45) est réalisé en matière plastique ou en carton et comprend :
- une paroi (16) de réception de la garniture qui s'étend le long d'un premier plan (18) ;
- au moins deux parois (19) de retenue de la garniture qui sont inclinées (21) par rapport au premier plan et qui bordent respectivement deux premiers bords (16b) opposés de la paroi de réception,
- au moins deux parois (24, 26) de renfort qui sont inclinées par rapport au premier plan et qui bordent respectivement deux seconds bords (16a) opposés de la paroi de réception, et
- au moins quatre parois d'angle (51 à 54), chaque paroi d'angle reliant et prolongeant une paroi (19) de retenue et une paroi (24, 26) de renfort,
- le dispositif (12) comprenant des moyens de liaison réversible du support (10) de garniture alimentaire avec le support pivotant (13), pour maintenir le support de garniture alimentaire sur le support pivotant lorsque le support pivotant est incliné,
**caractérisé en ce que** le support (10) de garniture alimentaire comprend deux parois (23, 25) longitudinales de renfort qui sont inclinées par rapport aux parois (19) de retenue, qui bordent respectivement les parois de retenue et sont reliées aux parois (51 à 54) d'angle, et **en ce que** les moyens de liaison réversible comprennent les parois (23, 25) longitudinales de renfort du support de garniture qui délimitent, avec les parois (19) de retenue et le cas échéant les parois (51 à 54) d'angle, deux cavités (30, 31) de réception d'organes mâles de liaison (38 à 40) solidaires du support pivotant (13).

2. Dispositif selon la revendication 1, dans lequel l'épaisseur des parois (16, 19, 23 à 26, 51 à 54) est inférieure à un millimètre, en particulier située dans une plage allant de 200 ou 300 µm jusqu'à 700 ou 800 µm.

3. Dispositif selon l'une des revendications 1 et 2 dans lequel les parois (23 à 26, 51 à 54) de renfort et d'angle ceinturent le support de garniture alimentaire et s'étendent sensiblement continûment tout autour de la paroi (16) de réception et des parois (19) de retenue.

4. Dispositif selon l'une quelconque des revendications 1 à 3 dans lequel certaines au moins des parois (23 à 26, 51 à 54) de renfort et d'angle s'étendent, en partie au moins, sous la face inférieure (33) de la paroi de réception (16).

5. Dispositif selon l'une quelconque des revendications 1 à 4, dans lequel certaines au moins des parois (23 à 26, 51 à 54) de renfort et d'angle présentent un bord (27, 28) libre qui s'étend le long d'un second plan (29) parallèle au premier plan (18).

6. Dispositif selon l'une quelconque des revendications 1 à 5, dans lequel le support (10) de garniture (45) alimentaire comporte des moyens (34, 35) de collecte et d'évacuation d'un (semi)liquide s'échappant de la garniture, y compris lorsque le support (10) est horizontal.

7. Dispositif selon la revendication 6 dans lequel les moyens de collecte et d'évacuation comportent une ou plusieurs dépression(s) (34, 35) formée(s) dans la paroi de réception (16) ou les parois de retenue (19), et le cas échéant dans les parois (23 à 26) de renfort.

8. Dispositif selon la revendication 7 dans lequel la ou les dépression(s) (34) présente(nt) un contour ouvert, en particulier de forme allongée, une dépression pouvant former une rainure débouchant hors du support de garniture alimentaire, à deux extrémités opposées du support.

9. Dispositif selon l'une quelconque des revendications 1 à 8, dans lequel le support (10) de garniture présente une forme allongée selon un axe longitudinal (36), qui comporte deux parois (19) de retenue qui s'étendent parallèlement à l'axe longitudinal, et dans lequel les moyens de collecte et d'évacuation comportent une (ou plusieurs) rainure(s) (34) formée(s) dans la paroi de réception (16, 17) et/ou dans les parois de retenue (19, 20), et qui s'étend(ent) parallèlement à l'axe longitudinal.

10. Dispositif selon l'une quelconque des revendications 1 à 9 dans lequel la matière plastique du support de garniture alimentaire est essentiellement constituée de polytéréphtalate d'éthylène amorphe ou d'un biopolymère tel que l'acide polylactique.

11. Dispositif selon l'une quelconque des revendications 1 à 10 dans lequel le support de garniture alimentaire est fabriqué par thermoformage ou par injection.

12. Dispositif selon l'une quelconque des revendications 1 à 11 dans lequel la liaison réversible est obtenue par emboîtement forcé des organes mâles (38 à 40) de liaison dans les cavités (30, 31) de réception du support (10) de garniture.

13. Dispositif selon l'une des revendications 1 à 12, dans lequel les organes mâles (38 à 40) de liaison sont intégrés à un dispositif (42) d'adaptation séparable du support (13) pivotant et pouvant être lié au support (13) pivotant de façon réversible, en particulier par magnétisme.

14. Dispositif selon l'une quelconque des revendications 1 à 13, dans lequel le support pivotant (13) est articulé selon un axe d'articulation (37) horizontal, et comprenant un dispositif (42) d'adaptation comportant des moyens (43) de liaison magnétique réversible complémentaires de moyens (15) de liaison magnétique réversible équipant le support (13, 14) pivotant, ainsi que des seconds organes (38 à 40) de liaison réversible complémentaires de premiers organes (30 à 32) de liaison réversible équipant le support (10, 11) de garniture, de sorte que le dispositif d'adaptation (42) peut être interposé entre le support (13) pivotant et le support (10) de garniture de façon à assurer une liaison réversible entre le support (13) pivotant équipé de moyens de liaison magnétique et le support (10) de garniture équipé de moyens de liaison mécanique.

15. Dispositif selon la revendication 13 ou 14 dans lequel le support pivotant comporte des aimants (15), et le dispositif (42) d'adaptation comporte une plaque ou lame (43) d'un matériau magnétique apte à être placée au contact du support pivotant pour être soutenue et maintenue solidaire de ce support par la force d'attraction magnétique exercée par les aimants, notamment lorsque le support pivotant est incliné à la verticale.

16. Dispositif selon l'une quelconque des revendications 13 à 15 dans lequel la désolidarisation du support (10) de garniture et du dispositif (42) d'adaptation peut être obtenue en exerçant un premier effort de désolidarisation sur le support de garniture alimentaire, tandis que la désolidarisation du dispositif (42) d'adaptation et du support (13) pivotant peut être obtenue en exerçant un second effort de désolidarisation sur le dispositif d'adaptation, la valeur du premier effort de désolidarisation étant inférieure à la valeur du second effort de désolidarisation.

17. Procédé de préparation d'un produit alimentaire comportant une garniture alimentaire (45), utilisant un dispositif (12) de préparation d'un produit alimentaire selon l'une quelconque des revendications 1 à 16, dans lequel :
- on dispose la garniture sur le support de garniture alimentaire ;
- on collecte des composés liquides ou semi liquides s'écoulant de la garniture, par des moyens (34, 35) de collecte tels que des rainures intégré(e)s au support de garniture alimentaire ;
- on incline le support pivotant (13) pour transférer la garniture alimentaire du support de garniture alimentaire jusqu'à une préparation alimentaire, en inclinant suffisamment le support garni pour provoquer le glissement de la garniture sur le - et hors du - support ; et
- on évacue et/ou on retient une partie au moins des composés liquides ou semi liquides collectés sur le support.

18. Procédé de préparation d'un produit alimentaire selon la revendication 17, dans lequel :
- on dispose la garniture alimentaire sur le support de garniture alimentaire,
- on conditionne le support garni dans une enceinte étanche contenant un ou plusieurs gaz formant une atmosphère protectrice, en particulier un mélange d'azote et de dioxyde de carbone, et
- on transfère, à la demande, la garniture du support garni jusque sur la préparation alimentaire, en inclinant suffisamment le support garni pour provoquer le glissement de la garniture sur le - et hors du - support.

19. Procédé selon la revendication 17 ou 18, dans lequel on conserve le support garni, le cas échéant conditionné sous atmosphère protectrice, dans une enceinte réfrigérée.

## Patentansprüche

1. Vorrichtung (12) für die Zubereitung eines Nahrungsmittelprodukts, das eine Füllung umfasst, die Vorrichtung umfassend:
- mindestens einen Träger (10) einer Nahrungsmittelfüllung (45), und
- einen Träger (13), der gemäß einer horizontalen Achse (37) schwenkbar ist, wobei:
- der Träger (10) der Nahrungsmittelfüllung (45) aus Kunststoff oder Karton gefertigt ist und umfasst:
- eine Aufnahmewand (16) der Füllung, die sich entlang einer ersten Ebene (18) erstreckt;
- mindestens zwei Haltewände (19) der Füllung, die relativ zu der ersten Ebene geneigt (21) sind und die jeweils an zwei gegenüberliegende erste Kanten (16b) der Aufnahmewand angrenzen,
- mindestens zwei Verstärkungswände (24, 26), die relativ zu der ersten Ebene geneigt sind und die jeweils an zwei gegenüberliegende zweite Kanten (16a) der Aufnahmewand angrenzen, und
- mindestens vier Eckwände (51 bis 54), wobei jede Eckwand eine Haltewand (19) und eine Verstärkungswand (24, 26) verbindet und verlängert,
- die Vorrichtung (12) umfassend reversible Verbindungsmittel des Trägers (10) der Nahrungsmittelfüllung mit dem schwenkbaren Träger (13), um den Träger der Nahrungsmittelfüllung auf dem schwenkbaren Träger zu halten, wenn der schwenkbare Träger geneigt ist,
**dadurch gekennzeichnet, dass** der Träger (10) der Nahrungsmittelfüllung zwei Verstärkungslängswände (23, 25) umfasst, die relativ zu den Haltewänden (19) geneigt sind, die jeweils an die Haltewände angrenzen und mit den Eckwänden (51 bis 54) verbunden sind, und **dadurch, dass** die reversiblen Verbindungsmittel die Verstärkungslängswände (23, 25) des Trägers der Füllung umfassen, die, mit den Haltewänden (19) und gegebenenfalls den Eckwänden (51 bis 54), zwei Hohlräume (30, 31) für die Aufnahme von männlichen Verbindungselementen (38 bis 40) begrenzen, die fest mit dem schwenkbaren Träger (13) verbunden sind.

2. Vorrichtung nach Anspruch 1, wobei die Dicke der Wände (16, 19, 23 bis 26, 51 bis 54) kleiner als ein Millimeter ist, insbesondere in einem Bereich von 200 oder 300 µm bis zu 700 oder 800 µm liegt.

3. Vorrichtung nach einem der Ansprüche 1 und 2, wobei die Verstärkungs- und Eckwände (23 bis 26, 51 bis 54) den Träger der Nahrungsmittelfüllung umgeben und sich im Wesentlichen durchgehend vollständig um die Aufnahmewand (16) und die Haltewände (19) herum erstrecken.

4. Vorrichtung nach einem der Ansprüche 1 bis 3, wobei sich mindestens einige der Verstärkungs- und Eckwände (23 bis 26, 51 bis 54) zumindest teilweise unter der Unterseite (33) der Aufnahmewand (16) erstrecken.

5. Vorrichtung nach einem der Ansprüche 1 bis 4, wobei mindestens einige der Verstärkungs- und Eckwände (23 bis 26, 51 bis 54) eine freie Kante (27, 28) aufweisen, die sich entlang einer zweiten Ebene (29) parallel zur ersten Ebene (18) erstreckt.

6. Vorrichtung nach einem der Ansprüche 1 bis 5, wobei der Träger (10) der Nahrungsmittelfüllung (45) Mittel (34, 35) zum Sammeln und Abgeben einer aus der Füllung austretenden (dickflüssigen) Flüssigkeit umfasst, einschließlich wenn der Träger (10) horizontal ist.

7. Vorrichtung nach Anspruch 6, wobei die Sammel- und Abgabemittel eine oder mehrere Vertiefungen (34, 35) umfassen, die in der Aufnahmewand (16) oder den Haltewänden (19) und gegebenenfalls in den Verstärkungswänden (23 bis 26) ausgebildet sind.

8. Vorrichtung nach Anspruch 7, wobei die Vertiefung(en) (34) eine offene Kontur aufweist/aufweisen, insbesondere in einer länglichen Form, wobei eine Vertiefung eine Rille bilden kann, die in zwei gegenüberliegende Enden des Trägers außerhalb des Trägers der Nahrungsmittelfüllung mündet.

9. Vorrichtung nach einem der Ansprüche 1 bis 8, wobei der Träger (10) der Füllung eine längliche Form gemäß einer Längsachse (36) aufweist, der zwei Haltewände (19) umfasst, die sich parallel zu der Längsachse erstrecken, und wobei die Sammel- und Abgabemittel eine (oder mehrere) Rillen (34) umfassen, die in der Aufnahmewand (16, 17) und/oder in den Haltewänden (19, 20) ausgebildet sind und die sich parallel zu der Längsachse erstrecken.

10. Vorrichtung nach einem der Ansprüche 1 bis 9, wobei der Kunststoff des Trägers der Nahrungsmittelfüllung im Wesentlichen aus amorphem Polyethylenterephthalat oder einem Biopolymer, wie Polymilchsäure, besteht.

11. Vorrichtung nach einem der Ansprüche 1 bis 10, wobei der Träger der Nahrungsmittelfüllung durch Thermoformen oder durch Spritzgießen hergestellt ist.

12. Vorrichtung nach einem der Ansprüche 1 bis 11, wobei die reversible Verbindung durch kraftschlüssiges Einstecken der männlichen Verbindungselemente (38 bis 40) in die Hohlräume (30, 31) des Trägers (10) der Füllung erhalten wird.

13. Vorrichtung nach einem der Ansprüche 1 bis 12, wobei die männlichen Verbindungselemente (38 bis 40) in eine Anpassungsvorrichtung (42) integriert sind, die von dem schwenkbaren Träger (13) trennbar ist und mit dem schwenkbaren Träger (13) reversibel, insbesondere durch Magnetismus, verbunden werden kann.

14. Vorrichtung nach einem der Ansprüche 1 bis 13, wobei der schwenkbare Träger (13) gemäß einer horizontalen Gelenkachse (37) angelenkt ist, und umfassend eine Anpassungsvorrichtung (42) mit reversiblen magnetischen Verbindungsmitteln (43), die mit den reversiblen magnetischen Verbindungsmitteln (15), mit denen der schwenkbare Träger (13, 14) ausgestattet ist, komplementär sind, sowie zweite reversible Verbindungselemente (38 bis 40), die mit den ersten reversiblen Verbindungselementen (30 bis 32), mit denen der Träger (10, 11) der Füllung ausgestattet ist, komplementär sind, so dass die Anpassungsvorrichtung (42) zwischen dem schwenkbaren Träger (13) und dem Träger (10) der Füllung so eingefügt werden kann, um eine reversible Verbindung zwischen dem mit magnetischen Verbindungsmitteln ausgestatteten schwenkbaren Träger (13) und dem mit mechanischen Verbindungsmitteln ausgestatteten Träger der Füllung (10) sicherzustellen.

15. Vorrichtung nach Anspruch 13 oder 14, wobei der schwenkbare Träger Magnete (15) umfasst, und die Anpassungsvorrichtung (42) eine Platte oder Lamelle (43) aus einem magnetischen Material umfasst, die geeignet ist, in Kontakt mit dem schwenkbaren Träger platziert zu werden, um durch die von den Magneten ausgeübte magnetische Anziehungskraft getragen und fest mit diesem Träger verbunden gehalten zu werden, insbesondere wenn der schwenkbare Träger vertikal geneigt ist.

16. Vorrichtung nach einem der Ansprüche 13 bis 15, wobei das Lösen des Trägers (10) der Füllung und der Anpassungsvorrichtung (42) durch Ausüben einer ersten Lösekraft auf den Träger der Nahrungsmittelfüllung erreicht werden kann, während das Lösen der Anpassungsvorrichtung (42) und des schwenkbaren Trägers (13) durch Ausüben einer zweiten Lösekraft auf die Anpassungsvorrichtung erreicht werden kann, wobei der Wert der ersten Lösekraft kleiner als der Wert der zweiten Lösekraft ist.

17. Verfahren für die Zubereitung eines Nahrungsmittelprodukts, umfassend eine Nahrungsmittelfüllung (45), unter Verwendung einer Vorrichtung (12) für die Zubereitung eines Nahrungsmittelprodukts nach einem der Ansprüche 1 bis 16, wobei:
- die Füllung auf dem Träger der Nahrungsmittelfüllung angeordnet wird;
- flüssige oder dickflüssige Verbindungen, die aus der Füllung abfließen, durch Sammelmittel (34, 35), wie in den Träger der Nahrungsmittelfüllung integrierte Rillen, gesammelt werden;
- der schwenkbare Träger (13) geneigt wird, um die Nahrungsmittelfüllung von dem Träger der Nahrungsmittelfüllung zu einer Nahrungsmittelzubereitung zu transferieren, indem der befüllte Träger ausreichend geneigt wird, um das Gleiten der Füllung auf dem Träger - und außerhalb - zu bewirken; und
- mindestens ein Teil der auf dem Träger gesammelten flüssigen oder dickflüssigen Verbindungen abgegeben und/oder zurückgehalten wird.

18. Verfahren für die Zubereitung eines Nahrungsmittelprodukts nach Anspruch 17, wobei:
- die Nahrungsmittelfüllung auf dem Träger der Nahrungsmittelfüllung angeordnet wird,
- der befüllte Träger in einem dichten Behälter verpackt wird, der ein oder mehrere Gase enthält, die eine Schutzatmosphäre bilden, insbesondere ein Gemisch aus Stickstoff und Kohlendioxid, und
- die Füllung des befüllten Trägers bis auf die Nahrungsmittelzubereitung, auf Wunsch, übertragen wird, indem der befüllte Träger ausreichend geneigt wird, um das Gleiten der Füllung auf dem Träger - und außerhalb - zu bewirken.

19. Verfahren nach Anspruch 17 oder 18, wobei der befüllte Träger, gegebenenfalls unter Schutzatmosphäre verpackt, in einem Kühlraum aufbewahrt wird.

## Claims

1. Device (12) for preparing a food product comprising a filling, the device comprising
- at least one support (10) for the food filling (45), and
- a support (13) which pivots about a horizontal axis (37),
wherein:
- the support (10) for the food filling (45) is made of plastics material or cardboard and comprises:
- a wall (16) for receiving the filling, which wall extends along a first plane (18);
- at least two walls (19) for retaining the filling, which walls are angled (21) with respect to the first plane and which border, respectively, two first opposing edges (16b) of the receiving wall,
- at least two reinforcing walls (24, 26) which are angled with respect to the first plane and which border, respectively, two opposing second edges (16a) of the receiving wall, and
- at least four corner walls (51 to 54), each corner wall joining and extending a retaining wall (19) and a reinforcing wall (24, 26),
- the device (12) comprising reversible connecting means for connecting the food filling support (10) to the pivoting support (13), in order to keep the food filling support on the pivoting support when the pivoting support is angled,
**characterized in that** the food filling support (10) comprises two longitudinal reinforcing walls (23, 25) which are angled with respect to the retaining walls (19), which border, respectively, the retaining walls, and are joined to the corner walls (51 to 54), and **in that** the reversible connecting means comprise the longitudinal reinforcing walls (23, 25) of the filling support which delimit, together with the retaining walls (19) and, if applicable, the corner walls (51 to 54), two cavities (30, 31) for receiving male connecting members (38 to 40) which are rigidly connected to the pivoting support (13).

2. Device according to claim 1, wherein the thickness of the walls (16, 19, 23 to 26, 51 to 54) is less than one millimeter, in particular in a range from 200 or 300 µm up to 700 or 800 µm.

3. Device according to either of claims 1 and 2, wherein the reinforcing walls and corner walls (23 to 26, 51 to 54) surround the food filling support and extend substantially continuously all around the receiving wall (16) and the retaining walls (19).

4. Device according to any of claims 1 to 3, wherein at least some of the reinforcing walls and corner walls (23 to 26, 51 to 54) extend, at least in part, beneath the lower face (33) of the receiving wall (16).

5. Device according to any of claims 1 to 4, wherein at least some of the reinforcing walls and corner walls (23 to 26, 51 to 54) have a free edge (27, 28) which extends along a second plane (29) parallel to the first plane (18).

6. Device according to any of claims 1 to 5, wherein the support (10) for the food filling (45) comprises means (34, 35) for collecting and draining off a (semi)liquid escaping from the filling, even when the support (10) is horizontal.

7. Device according to claim 6, wherein the collecting and draining off means comprise one or more depressions (34, 35) formed in the receiving wall (16) or the retaining walls (19), and, if applicable, in the reinforcing walls (23 to 26).

8. Device according to claim 7, wherein the depression(s) (34) has (have) an open contour, in particular of an elongate shape, a depression being able to form a groove opening outside the food filling support at two opposite ends of the support.

9. Device according to any of claims 1 to 8, wherein the filling support (10) has a shape extending along a longitudinal axis (36), which shape comprises two retaining walls (19) extending parallel to the longitudinal axis, and wherein the collecting and draining off means comprise one (or more) groove(s) (34) which is or are formed in the receiving wall (16, 17) and/or in the retaining walls (19, 20), and which extend(s) parallel to the longitudinal axis.

10. Device according to any of claims 1 to 9, wherein the plastics material of the food filling support is substantially composed of amorphous polyethylene terephthalate or of a biopolymer such as polylactic acid.

11. Device according to any of claims 1 to 10, wherein the food filling support is manufactured by thermoforming or by injection.

12. Device according to any of claims 1 to 11, wherein the reversible connection is achieved by forced fitting of the male connecting members (38 to 40) into the receiving cavities (30, 31) of the filling support (10).

13. Device according to any of claims 1 to 12, wherein the male connecting members (38 to 40) are integrated into a detachable adapting device (42) of the pivoting support (13) and can be connected to the pivoting support (13) in a reversible manner, in particular by magnetism.

14. Device according to any of claims 1 to 13, wherein the pivoting support (13) is hinged about a horizontal hinge axis (37), and comprising an adapting device (42) having reversible magnetic connecting means (43) that are complementary to reversible magnetic connecting means (15) provided on the pivoting support (13, 14), and second reversible connecting members (38 to 40) that are complementary to first reversible connecting members (30 to 32) provided on the filling support (10, 11), so that the adapting device (42) can be interposed between the pivoting support (13) and the filling support (10) to provide a reversible connection between the pivoting support (13) which is provided with magnetic connecting means and the filling support (10) which is provided with mechanical connecting means.

15. Device according to claim 13 or 14, wherein the pivoting support comprises magnets (15), and the adapting device (42) comprises a plate or strip (43) made of a magnetic material capable of being placed in contact with the pivoting support so as to be supported and kept rigidly connected to said support by the magnetic attraction force exerted by the magnets, in particular when the pivoting support is angled vertically.

16. Device according to any of claims 13 to 15, wherein the filling support (10) can be separated from the adapting device (42) by applying a first separating force to the food filling support, while the adapting device (42) can be separated from the pivoting support (13) by applying a second separating force to the adapting device, the value of the first separating force being less than the value of the second separating force.

17. Method for preparing a food product comprising a food filling (45), using a device (12) for preparing a food product according to any of claims 1 to 16, wherein:
- the filling is placed on the food filling support;
- liquid or semi-liquid compounds flowing from the filling are collected by collecting means (34, 35), such as grooves integrated into the food filling support;
- the pivoting support (13) is angled to transfer the food filling from the food filling support to a food preparation, by angling the support with the filling thereon sufficiently to cause the filling to slide onto the - and from the - support; and
- at least some of the liquid or semi-liquid compounds collected on the support are drained off and/or retained.

18. Method for preparing a food product according to claim 17, wherein:
- the food filling is placed on the food filling support,
- the support with the filling thereon is packaged in a sealed chamber containing one or more gases forming a protective atmosphere, in particular a mixture of nitrogen and carbon dioxide, and
- on request, the filling of the support with the filling thereon is transferred to the food preparation by angling the support with the filling thereon sufficiently to cause the filling to slide onto the - and from the - support.

19. Method according to claim 17 or 18, wherein the support with the filling thereon, if applicable packaged in a protective atmosphere, is stored in a refrigerated chamber.
